# EUROPÄISCHE PATENTANMELDUNG

(11) **EP 4 729 731 A1**
(43) Veröffentlichungstag der Anmeldung: **22.04.2026**
(21) Anmeldenummer: 25209684.7
(22) Anmeldetag: 20.10.2025
(51) Int. Cl.: E05C 17/00, E05C 17/20, E05F 15/41, E05F 15/611, E05F 15/616

(54) **BREMSE ZUM BREMSEN DER RELATIVEN BEWEGUNG VON ZWEI TEILEN ZUEINANDER**

(30) Priorität: 21.10.2024 DE 202024106047 U
(71) Anmelder: HQ-Europe GmbH, 58638 Iserlohn (DE)
(72) Erfinder: Rucha, Christian, 58638 Iserlohn (DE); Jostmann, Marc, 58638 Iserlohn (DE); Kran, Edwin, 58638 Iserlohn (DE)
(74) Vertreter: Haverkamp Patentanwälte PartG mbB

(57) **Zusammenfassung**

Die Erfindung betrifft eine Bremse 1 zum Bremsen der relativen Bewegung von zwei Teilen 3, 6 zueinander, wobei insbesondere das erste Teil 3 eine Klappe, etwa eine Tür eines Kraftfahrzeuges, und das zweite Teil 6 ein Chassisteil, etwa eine Säule eines Kraftfahrzeuges, an dem die Klappe angelenkt ist, ist, die Bremse 1 aufweisend:
- einen Abstützabschnitt 10, 11 zum Abstützen der Bremse 1 an dem ersten Teil 3 und
- eine Bremseinrichtung 15 zum Bremsen einer an dem zweiten Teil 6 angeschlossen Bremsstange 4 mit einer in Richtung der Bremsstange 4 weisenden Bremskraft 8.

Besonderes Kennzeichen ist, dass die Bremseinrichtung 15 unter Zwischenschaltung eines Messabschnitts 12, 13 an dem Abstützabschnitt 10, 11 jedenfalls in Bremskraftrichtung 8 abgestützt ist und der Messabschnitt 12, 13 in eine zu der Bremskraftrichtung 8 orthogonale Richtung weist, sodass der Messabschnitt 12, 13 durch eine bremsbedingte Abstützung der Bremseinrichtung 15 gegenüber dem Abstützabschnitt 10, 11 eine in Bremskraftrichtung 8 weisende Biegung erfährt und wobei ein Sensor 16 zur Messung der in Bremskraftrichtung 8 weisenden Biegung des Messabschnittes 12, 13 vorgesehen ist.

## Beschreibung

Die Erfindung betrifft eine Bremse zum Bremsen der relativen Bewegung von zwei Teilen zueinander mit den Merkmalen des Oberbegriffs des Anspruchs 1. Des Weiteren betrifft die Erfindung eine entsprechende Anordnung sowie ein entsprechendes System.

Bremsen dienen dem Verlangsamen der relativen Bewegung zweier zueinander bewegten Teile. Das maximale Verlangsamen ist das lösbare Halten der beiden Teile in einer bestimmten Relativlage zueinander, weshalb im Rahmen dieser Ausführungen auch ein Halten in Folge des Stoppens der Bewegung der beiden Teile zueinander unter dem Begriff Bremsen subsumiert wird.

Zum Bremsen verfügt die gegenüber einem ersten Teil abgestützte Bremse über eine Bremseinrichtung. Die Bremseinrichtung wirkt auf eine an dem zweiten Teil angeschlossenen Bremsstange. Die Bremsstange ist dergestalt an dem zweiten Teil angeschlossen, dass bei einer Bewegung des zweiten Teils gegenüber dem ersten Teil auch die Bremsstange relativ zu der Bremseinrichtung bewegt wird. Wird die Bremsstange mittels der Bremseinrichtung gebremst, wird auch die Bewegung des zweiten Teils gegenüber dem ersten Teil gebremst.

Zum Abstützen, respektive Anschließen der Bremse gegenüber bzw. an dem ersten Teil verfügt die Bremse über einen Abstützabschnitt. Über diesen wird die von der Bremseinrichtung zum Abbremsen der Bewegung der beiden Teile zueinander wirkende Bremskraft, die im Wesentlichen in die Richtung weist, in die die Bremsstange zu der Bremse bewegt wird, auf das erste Teil übertragen.

Eine solche Bremse, die eine Bremsstange bremst, wird zum Beispiel bei Klappen eines Kraftfahrzeuges eingesetzt, etwa der Türen (Türklappen), der Motorraumklappe oder der Heckklappe, die den Kofferraum verschließt. Eine solche Bremse ist etwa in EP 3 266 968 B1 beschrieben.

In einigen Anwendungsfällen besteht die Notwendigkeit der Kenntnis über die Größe der Bremskraft, mit der die Bremsstange gebremst wird. Dies ist beispielsweise in folgendem Szenario der Fall:
Eine Tür ist an der Säule eines Kraftfahrzeuges mittels eines Gelenkes angelenkt. Eine an der Tür abgestützte Bremse bremst die Schwenkbewegung der Tür gegenüber der Säule, indem sie eine an der Säule angeschlossene, exzentrisch zu dem Gelenk angeordnete Bremsstange mit einer Bremseinrichtung bremst. Die Bremse dient auch dem Halten der Tür auf einer bestimmten Schwenkposition.

Damit eine durch die Bremse auf einer bestimmten Schwenkposition gehaltene Tür wieder verschlossen werden kann, drückt der Nutzer auf die Tür, wie er es üblicherweise gewohnt ist. Der hieraus resultierende Kraftanstieg auf die Anordnung Bremse/gebremste Bremsstange bis zu einer vorgegebenen Auslösekraft soll dazu führen, dass die Bremseinrichtung gelöst und die Bremsstange gegenüber der Bremse bewegt werden kann, sodass die Tür durch den Nutzer verschwenkt werden kann.

Andere Nutzungen eines Bremskraftsignals sind selbstverständlich denkbar.

Ein Vorschlag zur Messung der Bremskraft ist beispielsweise in EP 3 492 679 A1 offenbart. Man geht hier davon aus, dass zwei zwei Gehäuseteile verbindende Stege infolge der Krafteinwirkung gestaucht, bzw. gedehnt werden. Diese Stauchung bzw. Dehnung wird mittels Dehnungsmessstreifen gemessen.

Eine andere Möglichkeit der Kraftmessung ist in WO 2018/087000 A1 offenbart. Hier wird mittels einer Wägezelle die durch das Gehäuse der Bremseinrichtung auf das erste Teil wirkende Druckkraft gemessen.

Nachteilig bei diesen Ausgestaltungen ist, dass unberücksichtigt bleibt, dass aufgrund der Vielzahl an Anwendungsfällen, verschiedenen Einsatzszenarien, Stellung der Bremseinrichtung zu der Bremsstange, Stellung der beiden Teile zueinander, etc. die durch die Bremse, respektive die Bremseinrichtung, aufgebrachte Bremskraft nicht nur in ihrer Amplitude veränderlich ist, sondern auch in ihrer Richtung. So können auf das Gehäuse der Bremseinrichtung zusätzlich Biegemomente, Torsionsmomente und Querkräfte wirken, die auf die Verformung des Gehäuses bzw. einer Wägezelle teilweise größeren Einfluss haben als die Kraft, die aus einer Nutzerinteraktion mit zumindest einem der beiden Teile resultiert. Eine sinnvolle Messung der Zug- und Druckkräfte ist im Stand der Technik nur schwer möglich.

Vor diesem Hintergrund stellt sich die Erfindung die Aufgabe, eine Bremse vorzuschlagen, mit der die Messung der Bremskraft verbessert und vereinfacht ist. Außerdem ist es Aufgabe der Erfindung, eine Anordnung einer Bremse sowie einer Bremsstange anzugeben sowie des Weiteren ein System umfassend ein erstes Teil und ein zweites Teil, deren relative Bewegung zueinander gebremst werden soll.

Gelöst wird die erstgenannte Aufgabe mit einer Bremse mit den Merkmalen des Anspruchs 1, die anordnungsbezogene Aufgabe mit einer Anordnung gemäß Anspruch 12 und der systembezogene Anspruch mittels eines Systems mit den Merkmalen des Anspruchs 14.

Vorteilhafte Ausgestaltungen ergeben sich aus den abhängigen Ansprüchen und der Beschreibung.

Erfindungsgemäß ist vorgesehen, dass die Bremseinrichtung unter Zwischenschaltung eines Messabschnitts an dem Abstützabschnitt jedenfalls in Bremskraftrichtung abgestützt ist. Damit wird die Abstützkraft zwischen Bremseinrichtung und Abstützabschnitt über den Messabschnitt geleitet. Der Messabschnitt ist zwischen Bremseinrichtung und Abstützabschnitt in Bremskraftrichtung eingeschaltet; an dem einen Ende des Messabschnittes schließt sich der Abstützabschnitt an, an dem anderen Ende des Messabschnittes die Bremseinrichtung.

Der Messabschnitt weist in eine zu der Bremskraftrichtung orthogonale Richtung. "Orthogonale Richtung" im Kontext dieser Formulierung bedeutet, dass der Messabschnitt so sehr rechtwinklig auf der Bremskraftrichtung steht, dass der Messabschnitt durch den Einfluss der Bremskraftrichtung gebogen wird und diese Biegung messbar ist. Die Biegeverformung des Messabschnittes ist am größten, wenn der Messabschnitt exakt orthogonal zu der Bremskraftrichtung steht, weshalb dies bevorzugt ist. Abweichungen hiervon sind aber möglich; so kann der Messabschnitt nicht nur exakt 90° gegenüber der Bremskraftrichtung ausgerichtet sein, sondern auch weniger; bevorzugt jedoch zumindest 50°. Es versteht sich, dass zur Biegeverformung des Messabschnittes dieser in seinem Biegeabschnitt frei biegbar ist und damit in seinem Biegeabschnitt nicht an weiteren die Biegung unterbindenden Elementen, etwa diese kontaktierend, abgestützt ist.

Es ist ein Sensor vorgesehen, der die in Bremskraftrichtung weisende Biegung des Messabschnittes misst.

Im Messabschnitt wird damit die Bremskraft, die in Bewegungsrichtung der Bremseinrichtung zu der Bremsstange weist, in ein Biegemoment umgewandelt. Man nutzt somit die elastische, also: vollständig reversible Verformung des Messabschnittes infolge der Biegung. Diese ist bevorzugt aufgrund der Materialeigenschaften des Messabschnittes linear zu der Biegekraft. Das Biegemoment bewirkt im Material eine wesentlich höhere Verformung als eine Zug-/Druckkraft, sodass diese durch Sensoren besser erkannt werden kann. So kann eine Signalausbeute in bis zu zehnfacher Stärke gegenüber einer herkömmlichen Zug-/Druckkraftmessung erzielt werden. Außerdem verfälschen etwaige Biegeeinflüsse auf das Messobjekt die Messung gegenüber einer reinen Zug-/Druckkraftmessung nicht überproportional, sodass Messfehler verringert werden können. Man verstärkt und filtert damit in geschickter Weise das Messsignal auf mechanische Weise.

Um die Biegung auf den Messabschnitt zu fokussieren und damit das Messsignal zu vergrößern, ist bevorzugt vorgesehen, dass der Abstützabschnitt steifer gegenüber der Bremskraftrichtung ausgelegt ist als der Messabschnitt. Dies wird etwa dadurch realisiert, dass der Abstützabschnitt flächig an das erste Teil angeschlossen wird. Eine andere Möglichkeit ist die Verstärkung des Abstützabschnittes mit Blick auf Materialdicken, Materialauswahl oder geometrische Verstärkungen, wie etwa Rippen oder Sicken.

So kann auch vorgesehen sein, dass der Messabschnitt gegenüber dem an den Messabschnitt angrenzenden Material tailliert ausgebildet ist. Das bedeutet, dass der Messabschnitt in diesem taillierten Bereich einen geringeren Querschnitt aufweist, also eine verringerte Breite. Die Taillierung erfolgt üblicherweise quer zur Erstreckungsrichtung des Messabschnittes und quer zur Bremskraftrichtung, mithin in Breitenrichtung des Messabschnittes. Das an den taillierten Bereich angrenzende Material führt zu der Bremseinrichtung bzw. dem Abstützabschnitt. In dem taillierten Bereich ist der Messabschnitt geschwächt, sodass ein Biegemoment zu einer besonders starken Oberflächendehnung des Messabschnittes führt, sodass diese verbessert gemessen werden kann.

So ist üblicherweise vorgesehen, dass der Messabschnitt in Bremskraftrichtung wesentlich schmaler ausgeführt ist als in die beiden hierzu orthogonalen Richtungen. Der Messabschnitt ist damit blechartig ausgestaltet; bevorzugt ist eine Materialdicke von etwa 2 bis 5 mm, wohingegen die Breite des Messabschnittes etwa 20 bis 50 mm beträgt. Hierdurch wird eine im Wesentlichen einachsige Verformung des Messabschnittes unter Bremskrafteinwirkung erzielt, was die Auswertung vereinfacht.

Es kann vorgesehen sein, dass der Messabschnitt als separater Abschnitt zwischen Bremseinrichtung und Abstützabschnitt vorgesehen ist, sodass eine klare Schnittstelle zwischen Bremseinrichtung und Abstützabschnitt gebildet.

Nach einer ersten Ausgestaltung kann vorgesehen sein, dass der Messabschnitt zwischen einem die Bremskraft der Bremseinrichtung übertragendes, der Bremseinrichtung zugehöriges Bremseinrichtungsgehäuse und dem Abstützabschnitt unmittelbar angeordnet ist. Dann kann auch vorgesehen sein, dass die Bremseinrichtung lediglich über einen oder mehrere Messabschnitte gegenüber einem oder mehreren Abstützabschnitte abgestützt ist, sodass die gesamte Abstützung der Bremse gegenüber dem ersten Teil mittels einem oder mehrerer Sensoren gemessen wird.

Nach einer zweiten Ausgestaltung kann vorgesehen sein, dass der Messabschnitt in das Bremseinrichtungsgehäuse integriert ist und die Bremseinrichtung über ein Gehäuseteil gegenüber dem Abstützabschnitt abgestützt ist, wobei der Messabschnitt als ein Gehäuseabschnitt ausgebildet ist, der orthogonal gegenüber der in Bremskraftrichtung ausgerichtet ist, wobei in den Messabschnitt die Bremskraft in einem ersten Bereich eingeleitet wird und in einem zweiten Bereich, der gegenüber dem ersten Bereich gegenüber der Bremskraftrichtung in orthogonaler Richtung beabstandet ist, in den Abstützabschnitt eingeleitet wird. Auch in diesem gilt die bezüglich des Begriffes "orthogonal" oben genannte Definition.

Ein solcher Gehäuseabschnitt kann etwa ein Steg sein, der sich etwa von Kante zu Kante des Gehäuses der Bremseinrichtung erstreckt. Von Besonderheit ist dann, dass dieser Steg im Mittenbereich gegenüber dem Abstützabschnitt abgestützt ist und dass die Dicke des Steges eine entsprechende Verformung desselben nennenswert zulässt, sodass diese für den Sensor messbar ist.

Der Steg kann beispielsweise parallel zur Bremskraftebene, also: die Ebene in der die Bremsstange geführt ist, ausgerichtet sein. Genauso ist denkbar, dass der Steg orthogonal hierzu ausgerichtet ist.

Es kann vorgesehen sein, dass die Messung der Biegung im Messabschnitt im Bereich des zu der Bremseinrichtung weisenden Ende vorgesehen ist. Ein Sensor, etwa auf dem Messabschnitt angeordnet, misst in diesem Bereich. Ausgehend von der Bremseinrichtung wird hier die Kraft in den Messabschnitt unmittelbar eingeleitet, sodass hier die größte Biegespannung zu erwarten ist.

Besonders bevorzugt ist in dieser Ausgestaltung vorgesehen, wenn der Messabschnitt mit einem taillierten Bereich unmittelbar an einen in Bremskraftrichtung weisenden, massiven Fortsatz der Bremseinrichtung, üblicherweise des Bremseinrichtungsgehäuses, angeschlossen ist. Die Bremskraft wird von dem massiven Fortsatz in den geschwächten, taillierten Bereich eingeleitet. Durch die sprungartige Materialverdünnung durch Taillierung und Verringerung der Dicke in Bremskraftrichtung wird die Biegespannung im Material in diesen Bereich fokussiert.

Ist zumindest ein Dehnungsmessstreifen als Sensor zur Messung der in Bremskraftmessung weisenden Biegung des Messabschnittes vorgesehen, so kann insbesondere vorgesehen sein, dass ein Dehnungsmessstreifenpaar im Messbereich angeordnet ist, wobei die beiden das Paar bildenden Dehnungsmessstreifen orthogonal zueinander ausgerichtet sind. Auf diese Weise kann eine Temperaturkompensation durch eine Referenzwertbildung des Widerstandes ermöglicht werden, genauso wie eine Kompensation einer etwaigen Torsionsspannung im Material. Üblicherweise sind die beiden Dehnungsmessstreifen in einer Gitteranordnung vorgesehen.

Durch die provozierte Biegung des Messabschnittes erfolgt ein Versatz der Bremseinrichtung gegenüber dem Abstützabschnitt in Bremskraftrichtung. Dieser beträgt üblicherweise wenige Zehntel Millimeter. In einer bevorzugten Ausgestaltung kann vorgesehen sein, sich diesen Versatz zunutze zu machen, um die sensorseitige Messung der Biegung des Messabschnittes von dem Messabschnitt entfernt durchzuführen. So kann etwa der Abstützabschnitt über einen seine Position repräsentierenden Fortsatz verfügen, der mit einem diesen Versatz messenden Sensor, der etwa an der Bremseinrichtung vorgesehen ist, interagiert.

An den Sensor angeschlossen ist üblicherweise ein Auswertemodul vorgesehen, das dazu eingerichtet ist, basierend auf der Biegung des Messabschnittes die Bremskraft zu ermitteln. Bevorzugt ist dieses Auswertemodul in der Bremse, üblicherweise nah am Messabschnitt angeordnet. Das Auswertemodul muss nicht einen absoluten Wert der Bremskraft ausgeben, in vielen Fällen reicht es, eine relative Messung durchzuführen. Auch muss die Bremskraft nicht zwingenderweise in einer kraftspezifischen Einheit (etwa Newton) angegeben werden; es reicht aus, wenn eine mit der Bremskraft proportionale Einheit oder ein codiertes Signal genutzt wird. Durch die Anordnung des Auswertemoduls in der Bremse kann die Signalauswertung sensornah erfolgen, was zu geringeren Messunsicherheiten führt.

Die Bremsstange wird an der Bremse in einer Bremsebene an der Bremseinrichtung gehalten. Erstreckt sich der Messabschnitt orthogonal zu dieser Bremsebene, ist bevorzugt vorgesehen, dass bezogen auf diese Bremsebene der Abstützabschnitt an das von der Bremsebene wegweisende Ende und die Bremseinrichtung an dem zu der Bremsebene hin weisenden Ende des Messabschnittes an den Messabschnitt angeschlossen ist. Damit ist die Einleitung der Kraft ausgehend von der Bremseinrichtung nah an der Bremsstange, sodass die Kraftdurchleitung ausgehend von der Bremseinrichtung hin zu dem Messabschnitt in etwa parallel zu der Bremsebene verläuft. Hierdurch wird die Bremskraft weiter auf den Messabschnitt fokussiert.

In einer diesbezüglich bevorzugten Ausgestaltung ist vorgesehen, dass der Abstützabschnitt von dem von der Bremsebene wegweisenden Ende des Messabschnittes in Richtung der Bremsebene verläuft. Der Messabschnitt und der Abstützabschnitt ergeben zusammenhängend in einer Seitenansicht dann eine U-Form. Der Messabschnitt und der Abstützabschnitt können in ihrer Erstreckungsrichtung durchaus im Wesentlichen parallel ausgerichtet sein. Im Übergang vom Messabschnitt zum Abstützabschnitt ist bevorzugt eine Rundung vorgesehen; diese Rundung kann durchaus einen Radius von 1 mm bis 2,5 mm aufweisen.

Damit eine Verformung des Messabschnittes gegenüber dem Abstützabschnitt nicht behindert wird, ist in dieser Ausgestaltung ein Spalt zwischen Abstützabschnitt und Messabschnitt in Bremskraftrichtung vorgesehen, insbesondere in demjenigen Bereich, in dem seitens der Bremseinrichtung die Abstützkraft in den Messabschnitt eingeleitet wird. So wird verhindert, dass sich der Messabschnitt infolge einer Verformung zusätzlich an dem Abstützabschnitt abstützt. Ebenso ist ein Spalt zwischen Bremseinrichtungsgehäuse und Messabschnitt vorgesehen.

Um für das von der Bremsebene abgewandte Ende des Messabschnittes ein massives Gegenlager bereitzustellen, kann vorgesehen sein, dass der die beiden Schenkel - der Messabschnitt und der Abstützabschnitt - verbindende Steg als Materialansammlung ausgeführt ist, die etwa der doppelten, bevorzugt der dreifachen Materialstärke des Messabschnittes in Bremskraftrichtung entspricht.

In einer weiteren Ausführungsform kann vorgesehen sein, dass die Bremse über zumindest zwei voneinander getrennte Abstützabschnitte verfügt und die Bremseinrichtung über jeweils einen, zu einem jeweiligen Abstützabschnitt führenden Messabschnitt gegenüber den Abstützabschnitten abgestützt ist. Somit sind zwei Sets à einem Abstützabschnitt und einem Messabschnitt vorgesehen, wobei die beiden Messabschnitte an der Bremseinrichtung, üblicherweise dem Bremseinrichtungsgehäuse, angeschlossen sind. Durch die Aufteilung der Abstützkraft auf zwei Abstützabschnitte werden die einzelnen Abstützabschnitte und auch die einzelnen Messabschnitte jeweils entlastet. Bevorzugt ist hierbei vorgesehen, dass die Messabschnitte bezüglich der Bremskraftrichtung gegenüberliegend angeordnet sind. Das bedeutet, dass die beiden Messabschnitte in entgegengesetzte Richtungen von der Bremsebene abragen.

Beide Messabschnitte können unabhängig voneinander alle vorstehend und nachstehend genannten Merkmale aufweisen, auch in den jeweiligen Kombinationen.

Bevorzugt sind die Messabschnitte gegenüber der Bremsebene jedoch symmetrisch ausgebildet, jedenfalls in ihrer vorgesehenen Biegerichtung. Hierdurch wird vermieden, dass sich die einzelnen Messabschnitte gegenseitig in einem Abstützvorgang Torsionsmomente induzieren. Bei einer symmetrischen Ausbildung der Messabschnitte wird Sorge dafür getragen, dass die beiden Messabschnitte um zueinander parallele Achsen durch eine durch die Bremseinrichtung eingeleitete Bremskraft gebogen werden.

Es wurde herausgefunden, dass es ausreichend ist, wenn die Biegung nur eines Messabschnittes vermessen wird und somit nur ein Sensor eingesetzt wird. Gleichwohl ist eine Vermessung der Biegung an beiden Messabschnitten möglich.

So ist ferner bevorzugt vorgesehen, dass die Bremseinrichtung gegenüber einem oder mehreren Abstützabschnitten nur über einen oder mehrere Messabschnitte abgestützt ist. Die Biegung eines jeden Messabschnitts infolge der Bremskraft wird gemessen. Hierdurch wird eine umfassende Messauswertung ermöglicht und vermieden, dass sich die Bremseinrichtung über parallele, nicht vermessene Kraftpfade an dem ersten Teil abstützt.

Um den Messabschnitt vor parasitären Krafteinflüssen, die aus einer anderen Richtung auf den Messabschnitt wirken als die Bremskraftrichtung, zu schützen, ist bevorzugt vorgesehen, dass die Bremseinrichtung in Bremskraftrichtung entlang einer Führung gelagert ist. Die Führung stützt die Bremseinrichtung somit gegenüber allen Kräften ab, die nicht in Bremskraftrichtung weisen, etwa Gravitationskräften; Kräfte in Bremskraftrichtung bewirken ein Verschieben der Bremseinrichtung entlang der Führung. Die Abstützung der Bremseinrichtung in Bremskraftrichtung erfolgt daher über den Messabschnitt. Die Abstützwirkung des Messabschnittes gegenüber dem Abstützabschnitt wird somit auf eine Abstützung in Bremskraftrichtung reduziert. Eine solche Lagerung kann beispielsweise durch eine Führung erfolgen, die an den Abstützabschnitt angeschlossen und an der die Bremseinrichtung entsprechend gelagert ist. Diese kann etwa durch ein oder mehrere Führungsbolzen, etwa als Rundstäbe ausgestaltet, ausgebildet sein. Hierfür kann ein die Bremseinrichtung einfassendes Gehäuse entsprechende Durchbrechungen aufweisen.

Bevorzugt ist in diesem Zusammenhang vorgesehen, wenn der Messabschnitt von dem Abstützabschnitt oder der Bremseinrichtung entkoppelt ist. Das bedeutet, dass der Messabschnitt an dem Abstützabschnitt bzw. an der Bremseinrichtung nur anliegt. Eine Kraftübertragung ist dann nur in einer Richtung, nämlich der Bremskraftrichtung, möglich und nicht noch zusätzlich quer hierzu.

Eine Abstützung über den Messabschnitt ist bei einer solchen Ausgestaltung bevorzugt nur auf Druck ausgelegt. Sollen Kräfte in beide gegenüberliegenden Richtungen der Bremskraftrichtung gemessen werden (also: Bewegen der Bremsstange vor und zurück), sind zwei bezüglich ihrer Abstützrichtung entgegengesetzte Messabschnitte vorgesehen. Der eine Messabschnitt kann sich dann an den Abstützabschnitt unmittelbar abstützen, der andere mittelbar über eine etwa an der Führung gegenüber dem Abstützabschnitt starr gelagerten Abstützfläche. Zur Ausbildung der einzelnen Elemente, insbesondere des Messabschnittes, können metallische Werkstoffe oder Kunststoffe in Betracht kommen. Kunststoffe können deswegen bevorzugt werden, da sie gegenüber metallischen Werkstoffen schon bei geringeren Kräften verformbar sind.

Bevorzugt kann vorgesehen sein, dass die gegenüberliegenden Messabschnitt auf Vorspannung gesetzt sind, sodass immer eine Druckkraft wirkt und die Messabschnitte in ihrer vorgesehenen Position gehalten sind.

Es kann vorgesehen sein, dass der Messabschnitt, der Abstützabschnitt und das Bremseinrichtungsgehäuse einstückig ausgebildet sind, gemeinsam ein Messsegment bildend. Durch das so einstückig ausgebildete Messsegment ist ein durchgängigerer Kraftfluss ausgehend von der Bremseinrichtung hin zum Messabschnitt und dem Abstützabschnitt möglich. Dies schließt nicht aus, dass der Abstützabschnitt zur Abstützung der Bremse weitere Elemente aufweist. Ein solches einstückiges Messsegment kann etwa in einem Druckguss- oder Spritzgussverfahren hergestellt werden.

Die Bremseinrichtung wirkt auf die Bremsstange bevorzugt mit Reibkörpern. Das bedeutet, dass die Bremseinrichtung dazu eingerichtet ist, dass zum Bremsen ein oder mehrere Reibkörper auf die Bremsstange mit einer Anpresskraft gedrückt werden, sodass die Bewegung zwischen Bremseinrichtung und Bremsstange durch Reibung verringert wird. Ist die Bremsstange gegenüber der Bremseinrichtung zum Halten gekommen, liegt zwischen Bremseinrichtung und Bremsstange ein Reibschluss vor.

Gleichwohl können auch weitere Bremsmechanismen eingesetzt werden. Insbesondere ist denkbar, als Bremseinrichtung einen Antrieb einzusetzen, mit dem die Bremsstange auch aktiv bewegt werden kann. Ein solcher Antrieb hält im nicht-antreibenden Modus die Bremsstange an einer bestimmten Position und bremst damit ihre Relativbewegung gegenüber der Bremseinrichtung, jedenfalls etwa durch die Reibung im Antriebssystem.

Für eine sichere Abstützung der Bremse an dem ersten Teil verfügt die Bremse bevorzugt über zumindest zwei voneinander beabstandete Befestigungselemente, mit denen die Bremse an dem ersten Teil befestigt ist. Die Befestigungselemente sind an einem oder verteilt an zumindest zwei Abstützabschnitten vorgesehen. Solche Befestigungselemente können etwa Muttern oder Schraubbolzen sein; letztere insbesondere abragend von dem Abstützabschnitt. Wird eine Schraubverbindung genutzt, erfolgt eine Befestigung üblicherweise dergestalt, dass die Schraubbolzen in Bremskraftrichtung weisen.

In einer diesbezüglichen Weiterbildung - die im Übrigen auch unabhängig von einer etwaigen Messung der Bremskraft denkbar ist - ist vorgesehen, dass die beiden voneinander beabstandeten Befestigungselemente dergestalt ausgelegt sind, dass der Abstand der beiden Befestigungselemente variabel ist. Hierdurch kann ein und dieselbe Bremse an verschiedenen Anschlussmimiken eines ersten Teils angeschlossen werden. Sind etwa verschiedene erste Teile gegeben, die zum Anschluss der Bremse einen unterschiedlichen Abstand der Befestigungselemente erfordern, kann mit derselben Bremse dieser Anforderung gerecht werden. Durch das Schaffen einer Schnittstelle zwischen Befestigung und Bremse durch das variable Einstellen des Abstandes der Befestigungselemente zueinander können wesentlich mehr Gleichteile genutzt werden, sodass die Bremse insgesamt auch für erste Teile in kleineren Stückzahlen kostengünstig hergestellt werden kann.

Zur Ausbildung der variablen Ausgestaltung des Abstandes ist in zumindest einem Abstützabschnitt eine in Variablenrichtung weisende Ausnehmung vorgesehen. Die Variablenrichtung ist diejenige Richtung, in die der Abstand variabel sein soll. In dieser Ausnehmung ist ein komplementärer Einsatz eingesetzt, der ein Befestigungselement aufweist oder mit einem solchen kooperiert und an einer vorbestimmten Position hält. Zur Abstandsänderung wird der Einsatz ausgetauscht oder anders an dem Abstützabschnitt positioniert, sodass das Befestigungselement in Variablenrichtung an einer anderen Stelle angeordnet ist. Durch das Vorsehen einer Ausnehmung in Variablenrichtung kann entlang dieser Ausnehmung das Befestigungselement unter Zuhilfenahme des Einsatzes frei positioniert werden.

Der Einsatz kann etwa eine Befestigungselementaufnahme aufweisen, um das Befestigungselement, etwa eine Schraube oder eine Mutter, an der vorgesehenen Position zu halten.

In diesem Fall kann insbesondere vorgesehen sein, dass jedenfalls der Messabschnitt aus einem metallischen Werkstoff, etwa einer Stahl- oder Aluminiumlegierung bereitgestellt ist, wobei dieser durchaus auch vollständig oder partiell mit einer Kunststoffschicht überzogen, etwa umspritzt sein kann. Ein metallischer Werkstoff hat eine weite lineare Verformung, ist ausreichend stabil und dauerfest, sodass dieser für das Nutzen der elastischen Verformung während des Biegevorgangs sinnvoll eingesetzt werden kann.

Die Erfindung betrifft ferner eine Anordnung einer vorbeschriebenen Bremse und einer in die Bremse eingeführte Bremsstange. Die Bremsstange ist durch die Bremseinrichtung bremsbar. Zudem ist die Bremsstange dazu ausgelegt, an das zweite Teil angeschlossen zu werden.

Es kann bezüglich dieser Anordnung vorgesehen sein, dass die Bremsstange endseitig auf der den Abstützabschnitt gegenüberliegenden Seite über einen Endanschlag, etwa einen Hammerkopf, verfügt, mit dem sich die Bremsstange gegenüber der Bremse in einer Endposition formschlüssig abstützt.

In einer Ausgestaltung kann in diesem Fall bremsseitig vorgesehen sein, dass an der Bremse eine mit dem Endanschlag fluchtende, von dem Abstützabschnitt zu der gegenüberliegenden Seite führende Durchbrechung vorgesehen ist, in die ein stiftartiger Abstützbolzen eingesetzt ist. Schlägt der Endanschlag an den Stift an, wird die Kraft nicht über den Messabschnitt in den Abstützabschnitt geführt, sondern unmittelbar über den stiftartigen Abstützbolzen in den Abstützabschnitt. Hierdurch wird in einem Endanschlagfall der Messabschnitt wirksam entlastet.

In einer anderen Ausgestaltung werden die zu dem Hammerkopf weisenden Enden der Führung der Bremseinrichtung, welche Führung in diesem Fall bevorzugt als Führungsbolzen ausgeführt ist, als Anschlag für den Hammerkopf genutzt. Die Führung ist bevorzugt formschlüssig gegenüber einer seitens des Hammerkopfes eingeleiteten Kraft an dem Abstützabschnitt abgestützt; etwa in Form eines Radialabsatzes.

Beschrieben wird nachstehend ein System einer vorbeschriebenen Anordnung von Bremse und Bremsstange sowie einem ersten Teil und einem gegenüber dem ersten Teil zu bremsenden zweiten Teil, wobei die Bremse an dem ersten Teil und die Bremsstange an dem zweiten Teil angeschlossen sind.

In diesem Fall ist bevorzugt vorgesehen, dass die Bremse an dem ersten Teil dergestalt montiert ist, dass in Benutzungsstellung des Systems der Messabschnitt der Bremse im Wesentlichen in Gravitationsrichtung weist, mithin die Bremsebene in der Horizontalen liegt. Die Gewichtskraft der Bremse an und für sich führt so nicht zu einer Torsionsbiegung des Messabschnittes und damit nicht zu zusätzlichen Messfehlern; diese Belastungen wirken entsprechend in einer Achse mit der Bremskraft auf den Messabschnitt. Die Messqualität wird auf diese Weise verbessert.

Die Erfindung wird anhand von zwei Ausführungsbeispielen anhand der beiliegenden Figuren näher erläutert. Es zeigen:
- **Fig. 1:**: Eine Skizze einer Einbausituation der erfindungsgemäßen Bremse in einer Draufsicht,
- **Fig. 2:**: eine dreidimensionale Detailansicht der erfindungsgemäßen Anordnung nach einer ersten Ausführungsform, aufweisend eine erfindungsgemäße Bremse und eine Bremsstange,
- **Fig. 3:**: ein Ausschnitt aus Figur 2, wobei die Befestigungselemente und Einsätze explodiert dargestellt sind,
- **Fig. 4:**: eine geschnittene Seitenansicht entsprechend der Anordnung aus Figur 2 mit ausgeblendeten Befestigungselementen,
- **Fig. 5:**: eine dreidimensionale Ansicht des Messsegmentes,
- **Fig. 6:**: eine erfindungsgemäße Weiterbildung zu der zuvor beschriebenen Bremse,
- **Fig. 7:**: eine dreidimensionale Detailansicht der erfindungsgemäßen Anordnung nach einer zweiten Ausführungsform,
- **Fig. 8:**: eine zur Figur 7 korrespondierende Seitenansicht,
- **Fig. 9:**: eine Ansicht von unten auf die Anordnung gemäß Figur 7 und
- **Fig. 10:**: die Ansicht aus Figur 8 mit einer teilweise geschnittenen Einsicht.

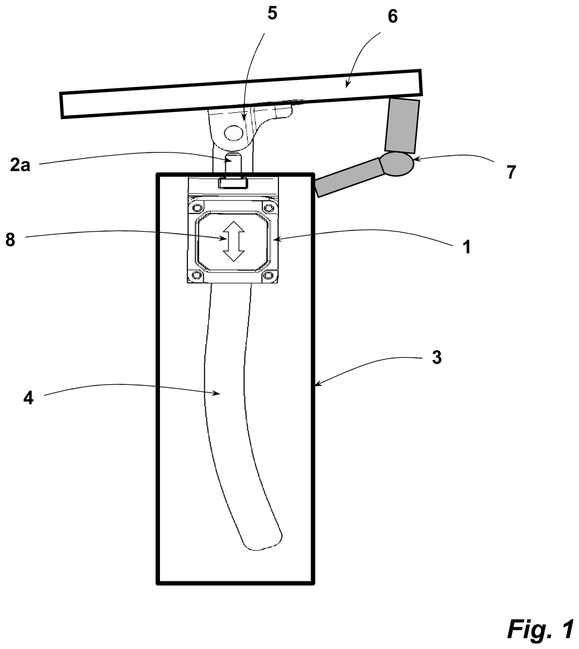

Figur 1 zeigt ein System aus einer nur schematisch dargestellten Bremse 1, welche über Befestigungselemente 2a, 2b (in der in Figur 1 dargestellten Draufsicht ist nur ein Befestigungselement 2a erkennbar) an einem schematisch dargestellten ersten Teil 3, hier einer Tür eines Kraftfahrzeuges, angeschlossen ist, sowie einer zu der Bremse 1 komplementären Bremsstange 4, die durch die Bremse 1 geführt ist und mittels eines Gelenkteiles 5 an einem schematisch dargestellten zweiten Teil 6, hier einer Säule eines Kraftfahrzeuges, angeschlossen ist. Das erste Teil 3 und das zweite Teil 6 sind über ein schematisch dargestelltes Gelenk 7 miteinander verbunden und um dieses schwenkbar. Aufgabe der Bremse 1 ist es, die relative Bewegung zwischen dem ersten Teil 3 und dem zweiten Teil 6 zu bremsen bzw. die beiden Teile 3, 6 in einer bestimmten Relativstellung zueinander zu halten. Hierfür wirkt die Bremse 1 auf die Bremsstange 4. Durch das Bremsen der Bremse 1 gegenüber der Bremsstange 4 wirkt auf die Bremse 1 - gleiches gilt im Übrigen auch analog für die Bremsstange 4 - eine Bremskraft 8. Die Richtung der Bremskraft 8 weist parallel zur Papierebene.

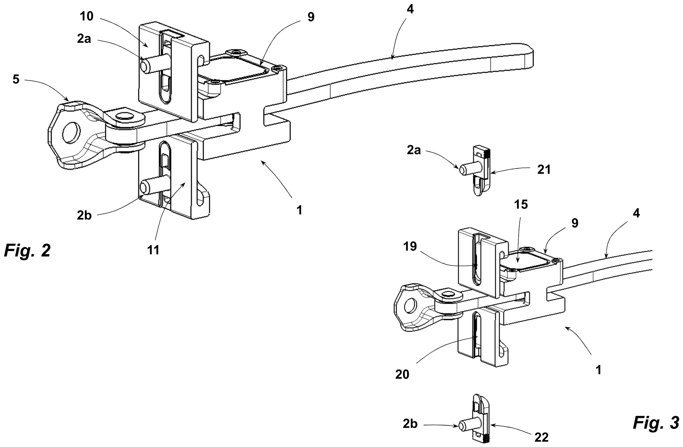

Unter Bezugnahme auf die Figuren 2 bis 5 wird nachstehend die Bremse 1 näher erläutert. Die Bremseinrichtung 15 ist in den Figuren nur teilweise dargestellt; weitergehende Details zur Bremsaktorik sind der Übersicht halber ausgeblendet.

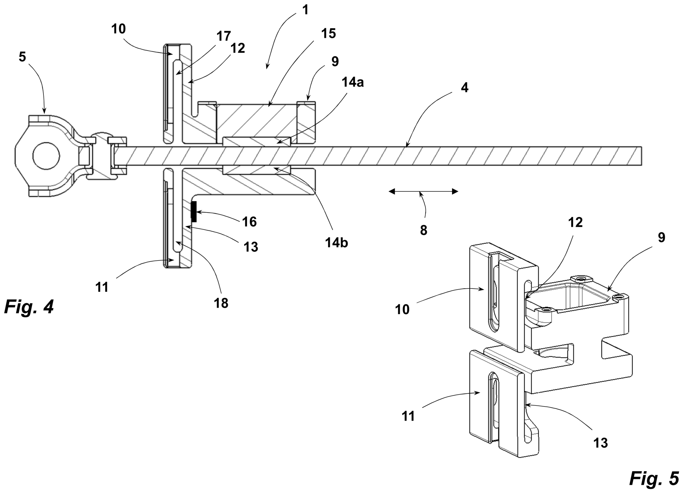

Die Bremse 1 umfasst eine hier nicht näher dargestellte Bremseinrichtung 15 mit zwei Reibkörpern 14a, 14b (siehe geschnittene Seitenansicht in Fig. 4), welche in ein Bremseinrichtungsgehäuse 9 eingefasst und daran in Bremskraftrichtung 8 abgestützt sind, zwei Abstützabschnitte 10, 11 sowie den jeweiligen Abstützabschnitten 10, 11 zugeordnete Messabschnitte 12, 13. Die beiden Abstützabschnitte 10, 11 und die beiden Messabschnitte 12, 13 sind jeweils identisch aufgebaut, sodass in den nachfolgenden Ausführungen die jeweiligen Abschnitte nur im Singular angesprochen werden; die Ausführungen gelten jedoch in analoger Weise für beide entsprechende Abschnitte.

In die Bremse 1 eingeführt, sodass die Bremseinrichtung 15, respektive in dem Bremseinrichtungsgehäuse 9 angeordneten Reibkörper 14a, 14b auf diese wirken kann, ist die Bremsstange 4. Wirkt die Bremseinrichtung 15 auf die Bremsstange 4 indem zumindest ein Reibkörper 14a mit einer in zu der Längserstreckung der Bremsstange 4 in orthogonale Richtung weisenden Anpresskraft auf die Bremsstange 4 gedrückt wird, resultiert dies in einer der Relativbewegung der Bremsstange 4 zu der Bremse 1 entgegengesetzten, den Gesetzen der Reibung unterliegenden Bremskraft 8. Diese Bremskraft 8 muss zur Abstützung der Bremse 1 ausgehend von der Bremseinrichtung 15 über ihr Bremseinrichtungsgehäuse 9 an das in den Figuren 2 bis 5 nicht dargestellte erste Teil 3 übertragen werden. Die Kraftübertragung auf das erste Teil 3 erfolgt über die Abstützabschnitte 10, 11, die ihrerseits über in das erste Teil 3 eingreifende Befestigungselemente 2a, 2b, hier Schraubbolzen, verfügen. Zwischen beiden Abstützabschnitten 10, 11 und Bremseinrichtung 15 ist ein Messabschnitt 12, 13 eingeschaltet. Der Messabschnitt 12, 13 erstreckt sich jeweils orthogonal zu der Bremskraft 8, hier orthogonal zur Bremsstange 4, respektive ihrer vorgesehenen Bewegungsrichtung.

Wirkt die Bremskraft 8 ausgehend von der Bremseinrichtung 15, bzw. dem Bremseinrichtungsgehäuse 9 auf den Messabschnitt 12, 13, wird der Messabschnitt 12, 13 elastisch verformt, respektive in Bremskraftrichtung 8 gebogen. Diese Biegung wird mit einem Sensor 16, hier einem Dehnungsmesstreifen gemessen. Von Besonderheit ist, dass in diesem Ausführungsbeispiel nur einer der beiden Messabschnitte 13 einen Dehnungsmessstreifen als Sensor 16 aufweist.

Zur Konzentration der Bremskraft auf den Messabschnitt 12, 13 und der daraus resultierenden Biegung ist der Messabschnitt 12, 13, wie in Figur 5 erkennbar, tailliert ausgebildet, mithin knochenförmig gegenüber dem angrenzenden Material, nämlich der Bremseinrichtung 15, respektive dem Bremseinrichtungsgehäuse 9 sowie dem Abstützabschnitt 10, 11. Zudem ist der Messabschnitt 12, 13 blechartig in seiner Materialstärke ausgebildet, hier mit etwa 3 mm.

Die Bremseinrichtung 15 schließt sich an dasjenige Ende des Messabschnittes 12, 13 an, welches zu der durch die Bremsstange 4 gebildeten Bremsebene weist; das von der Bremsebene und damit von der Bremsstange 4 wegweisende Ende des Messabschnittes 12, 13 schließt an den Abstützabschnitt 10, 11 an. In diesem Ausführungsbeispiel ist der Sensor 16 in demjenigen Bereich des Messabschnittes 13 angeordnet, der zu dem zu der Bremsebene, mithin zu der Bremsstange 4 hinweisenden Ende des Messabschnittes 13 liegt.

Der Abstützabschnitt 10, 11 ist ausgehend von dem von der Bremsebene, mithin der Bremsstange 4 wegweisenden Ende des Messabschnittes 12, 13 zurück zur Bremsebene, mithin zur Bremsstange 4 geführt; Messabschnitt 12, 13 und Abstützabschnitt 10, 11 bilden somit gemeinsam eine U-Form. Zwischen den beiden Schenkeln - dem Messabschnitt 12, 13 einerseits und dem Abstützabschnitt 10, 11 andererseits - ist ein Spalt 17, 18 belassen, sodass der Messabschnitt 12, 13 gegenüber dem Abstützabschnitt 10, 11 frei gebogen werden kann.

Der Abstützabschnitt 10, 11, der Messabschnitt 12, 13 sowie das Bremseinrichtungsgehäuse 9 sind im vorliegenden Fall einstückig als Messsegment aus einem Aluminiumdruckgussgehäuse gebildet.

Die vorliegende Bremse 1 verfügt über zwei Abstützabschnitte 10, 11 sowie zwei dazugehörige Messabschnitte 12, 13. Eine weitere Abstützung gegenüber dem ersten Teil 3 erfolgt nicht, sodass die gesamte Bremskraft 8 durch die Messabschnitte 12, 13 hindurchgeleitet und damit auswertbar ist.

Die Bremse 1 ist über die beiden Befestigungsabschnitte 2a, 2b an dem ersten Teil 3 angeschlossen.

Es kann durchaus vorkommen, dass der Abstand der komplementären Befestigungselemente von Seiten des ersten Teils 3 zwischen verschiedenen ersten Teilen unterschiedlich ist. Um die Variantenvielfalt zu reduzieren, ist vorgesehen, dass die Abstützabschnitte 10, 11 über Befestigungselemente 2a, 2b verfügen, deren Abstand variabel ist. Die entsprechende Funktionsweise wird insbesondere anhand Figur 3 näher erläutert.

Die Abstützabschnitte 10, 11 verfügen über eine jeweilige Ausnehmung 19, 20. In diese Ausnehmungen 19, 20 sind Einsätze 21, 22 einsetzbar, die wiederum die Befestigungselemente 2a, 2b tragen. Die Ausnehmungen 19, 20 sind hier in Hochachsenrichtung, mithin Gravitationsrichtung als Langausnehmungen ausgebildet. Soll der Abstand der beiden Befestigungselemente 2a, 2b verändert werden, müssen auf diese Weise nur anders geartete Einsätze 21, 22 vorgesehen werden, etwa solche, bei denen die Befestigungselemente 2a, 2b mehr zur Bremsebene hin angeordnet sind.

Die Befestigungselemente 2a, 2b selbst sind in diesem Ausführungsbeispiel Vierkantschrauben, wobei der jeweilige Schraubenkopf den Abstützabschnitt 10, 11 in der Ausnehmung 19, 20 hintergreift.

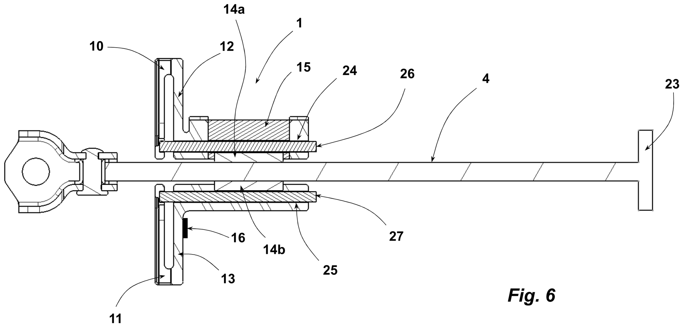

Figur 6 zeigt eine Weiterbildung der erfindungsgemäßen Anordnung einer Bremse 1 mit einer Bremsstange 4. Bei gleichen Teilen werden in den nachstehenden Ausführungen auch die gleichen Bezugszeichen wie vorstehend genutzt.

Die Bremsstange 4 verfügt in diesem Ausführungsbeispiel über einen Endanschlag 23, der nach Art eines Hammerkopfes ausgebildet ist. Wird die Bremse 1 in Richtung des Endanschlages 23 bewegt (in Figur 6 nach rechts) schlägt die Bremse 1 an den Endanschlag 23 an.

Um den Messabschnitt 12, 13 jeweils zu schützen, verfügt die Bremse 1 über mit dem Endanschlag 23 fluchtende Durchbrechungen 24, 25, in die jeweils ein stiftartiger Abstützbolzen 26, 27 eingesetzt ist. Die Abstützung zwischen Bremse 1 und Endanschlag 23 erfolgt auf der Stirnfläche des Abstützbolzens 26, 27. Dieser ist an seinem anderen distalen Ende an dem Abstützabschnitt 10, 11 abgestützt, sodass in diesem Fall die Kraftübertragung über den Messabschnitt 12, 13 aus Sicherheitsgründen überbrückt wird. In der normalen betrieblichen Nutzung spielt der Abschnittsbolzen 26, 27 keine Rolle.

Im Übrigen ist die Bremse 1 wie zuvor erläutert ausgeführt.

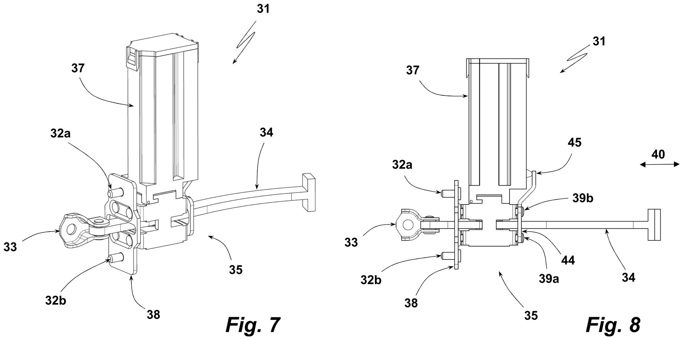

Die Figuren 7 bis 10 zeigen eine zweite Ausführungsform der Erfindung.

Die Figuren 7 und 8 zeigen eine Bremse 31 in einer dreidimensionalen Ansicht. Die Bremse 31 ist über Befestigungselemente 32a, 32b an einem nicht dargestellten ersten Teil, hier eine Tür eines Kraftfahrzeuges angeschlossen. Durch die Bremse 31 ist eine zu dieser komplementäre Bremsstange 34 geführt, welche mittels eines Gelenkteiles 33 an einem hier nicht dargestellten zweiten Teil, nämlich einer Säule eines Kraftfahrzeuges, angeschlossen ist.

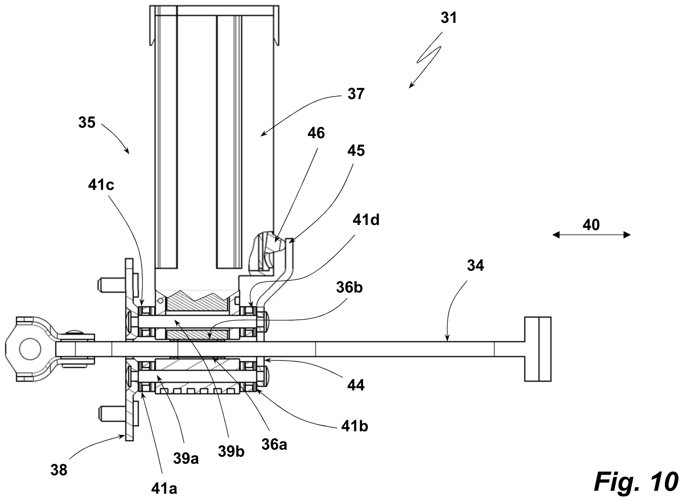

Die Bremse 31 ist bezüglich ihrer Bremseinrichtung 35 im Wesentlichen aufgebaut wie unter Bezugnahme auf die Figuren 2 bis 5 beschrieben. Sie weist eine Bremseinrichtung 35, welche - wie in Figur 10 zu erkennen - über zwei Reibkörper 36a, 36b verfügt, welche durch einen in dem Bremseinrichtungsgehäuse 37 untergebrachten Motor aufeinander zufahrbar sind, sodass diese auf die Bremsstange 34 wirken, sodass die Bremsstange 34 mit einer in ihre Erstreckungsrichtung und damit in Bremskraftrichtung 40 weisenden Bremskraft bremsen.

Die Bremseinrichtung 35 ist gegenüber dem Abstützabschnitt 38, an dem die Befestigungselemente 32a, 32b zum Anschluss der Bremse 31 an das erste Teil angeschlossen sind, entlang von vier Führungsbolzen 39a, 39b, 39c in Bremskraftrichtung 40 geführt. Die Bremseinrichtung 35 ist so gegenüber auf die Bremseinrichtung 37 wirkende Kräfte, die orthogonal zur Bremskraftrichtung 40 sind, gelagert. Die vier Führungsbolzen 39a, 39b, 39c sind vorliegend als Rundstäbe vorgesehen.

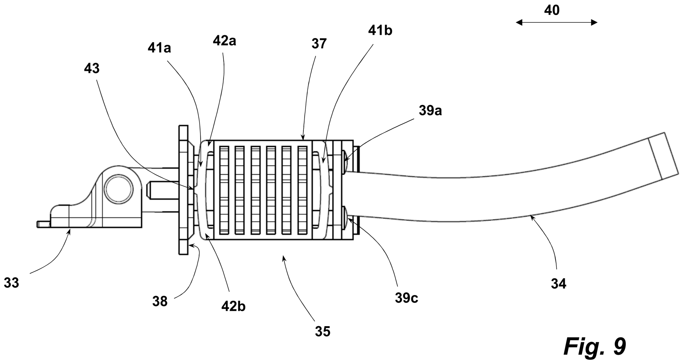

Zur Abstützung der Bremseinrichtung 35 in Bremskraftrichtung 40 verfügt das Bremseinrichtungsgehäuse 37 über zwei Messabschnitte 41a, 41b, 41c, 41d (siehe Figuren 9 und 10). Diese Messabschnitte 41a, 41b, 41c, 41d erstrecken sich im Wesentlichen orthogonal zur Bremskraftrichtung 40. An ihren distalen Enden 42a, 42b (in den Figuren lediglich in Figur 9 an einem Messabschnitt 41 der Übersicht halber gekennzeichnet) wird die von der Bremseinrichtung 35 in Bremskraftrichtung 40 wirkende Kraft zur Abstützung der Bremsstange 34 gegenüber dem Abstützabschnitt 38 eingeleitet. Im Mittenbereich 43 der Messabschnitte 41a, 41b, 41c, 41d (lediglich bezüglich eines Messabschnittes 41 in Figur 9 der Übersicht halber eingezeichnet) wird die Kraft aus dem jeweiligen Messabschnitt 41a, 41b, 41c, 41d in den Abstützabschnitt 38 ausgeleitet. Durch den orthogonal zur Bremskraftrichtung 40 weisenden Versatz zwischen Krafteinleitung 42a, 42b und -ausleitung 43 wird der Messabschnitt 41a, 41b, 41c, 41d unter entsprechender Belastung gebogen.

Die Messabschnitte 41a, 41b, 41c, 41d liegen an dem Abstützabschnitt 38 mit ihrem Kraftausleitungsbereich 43 nur an und sind damit von dem Abstützabschnitt 38 entkoppelt, Die Entkopplung bewirkt, dass die Messabschnitte 41a, 41b, 41c, 41d nur die in Bremskraftrichtung 40 wirkende Bremskraft messen und nicht zusätzliche Momente, etc. Diese werden über die Führungsbolzen 39a, 39b, 39c an den Abstützabschnitt 38 übertragen. Je nachdem, in welche Richtung die Bremskraft wirkt, werden entweder die zum Abstützabschnitt 38, an dem die Befestigungselemente 32a, 32b vorgesehen sind (diese sind in Figur 9 ausgeblendet) Messabschnitte 41a, 41c beansprucht oder die zu einem an der gegenüberliegenden Seite zu besagtem Abstützabschnitt 38, an die Führungsbolzen 39a, 39b, 39c geschlossenen, den Abstützabschnitt 38 repräsentierenden Fortsatz 44. Auf diese Weise werden Bremskräfte in beide Richtungen über die Messabschnitte 41a, 41b, 41c, 41d messbar gemacht.

Durch die Biegung der Messabschnitte 41a, 41b, 41c, 41d unter Belastung erfährt das gesamte Messeinrichtungsgehäuse 37 einen Versatz in Bremskraftrichtung 40 gegenüber dem Abstützabschnitt 38.

Um diesen Versatz messbar zu machen, verfügt der den Messabschnitt 38 repräsentierende Fortsatz 44 über ein auf das Bremseinrichtungsgehäuse 37 wirkendes Repräsentationssegment 45. Verschiebt sich das Bremseinrichtungsgehäuse 37 entlang der Führungsbolzen 39a, 39b, 39c in Bremskraftrichtung 40, ändert es damit seinen Abstand zu dem Repräsentationssegment 45. Diese Änderung wird bremseinrichtungsseitig mittels eines hier nicht näher dargestellten Sensors 46 gemessen.

Man macht sich somit in geschickter Weise die wesentlich größere Steifigkeit des aus einem Metallwerkstoff bereitgestellten, den Abstützabschnitt 38 repräsentierenden Fortsatzes 44 sowie des übrigen Teils des Bremseinrichtungsgehäuses 37 einerseits gegenüber der aus einem Kunststoff bereitgestellten Messabschnitte 41a, 41b, 41c, 41d andererseits zunutze, um die seitens der Messabschnitte 41a, 41b, 41c, 41d erzeugte Biegung von diesen beabstandet zu detektieren und trotzdem ein reines Messsignal zu erhalten.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1, 31: Bremse
- 2a, 2b, 32a, 32b: Befestigungselement
- 3: erstes Teil
- 4, 34: Bremsstange
- 5, 33: Gelenkteil
- 6: zweites Teil
- 7: Gelenk
- 8, 40: Bremskraft(richtung)
- 9, 37: Bremseinrichtungsgehäuse
- 10, 11, 38: Abstützabschnitt
- 12, 13, 41a, 41b, 41c, 41d: Messabschnitt
- 14a, 14b, 36a, 36b: Reibkörper
- 15, 35: Bremseinrichtung
- 16, 46: Sensor
- 17, 18: Spalt
- 19, 20: Ausnehmung
- 21, 22: Einsatz
- 23: Endanschlag
- 24, 25: Durchbrechung
- 26, 27: Abstützbolzen

- 39a, 39b, 39c: Führungsbolzen
- 42a, 42b: Krafteinleitung in den Messabschnitt
- 43: Kraftausleitung in den Messabschnitt
- 44: Abstützabschnitt repräsentierender Fortsatz
- 45: Repräsentationssegment

## Patentansprüche

1. Bremse (1, 31) zum Bremsen der relativen Bewegung von zwei Teilen (3, 6) zueinander, wobei insbesondere das erste Teil (3) eine Klappe, etwa eine Tür eines Kraftfahrzeuges, und das zweite Teil (6) ein Chassisteil, etwa eine Säule eines Kraftfahrzeuges, an dem die Klappe angelenkt ist, ist, die Bremse (1, 31) aufweisend:
- einen Abstützabschnitt (10, 11, 38)zum Abstützen der Bremse (1, 31) an dem ersten Teil (3) und
- eine Bremseinrichtung (15, 35) zum Bremsen einer an dem zweiten Teil (6) angeschlossen Bremsstange (4, 34) mit einer in Richtung der Bremsstange (4, 34) weisenden Bremskraft (8),
**dadurch gekennzeichnet, dass**
die Bremseinrichtung (15, 35) unter Zwischenschaltung eines Messabschnitts (12, 13, 41a, 41b, 41c, 41d) an dem Abstützabschnitt (10, 11, 38) jedenfalls in Bremskraftrichtung (8) abgestützt ist und der Messabschnitt (12, 13, 41a, 41b, 41c, 41d) in eine zu der Bremskraftrichtung (8, 40) orthogonale Richtung weist, sodass der Messabschnitt (12, 13, 41a, 41b, 41c, 41d) durch eine bremsbedingte Abstützung der Bremseinrichtung (15, 35) gegenüber dem Abstützabschnitt (10, 11, 38) eine in Bremskraftrichtung (8, 40) weisende Biegung erfährt und wobei ein Sensor (16) zur Messung der in Bremskraftrichtung (8, 40) weisenden Biegung des Messabschnittes (12, 13, 41a, 41b, 41c, 41d) vorgesehen ist.

2. Bremse nach Anspruch 1, **dadurch gekennzeichnet, dass** der Messabschnitt (12, 13) gegenüber dem an den Messabschnitt (12, 13) angrenzenden Material in Breitenrichtung tailliert ausgebildet ist.

3. Bremse nach einem der Ansprüche 1 oder 2, **dadurch gekennzeichnet, dass** der Messabschnitt (41a, 41b, 41c, 41d) in das Bremseinrichtungsgehäuse (37) integriert ist, wobei der Messabschnitt (41a, 41b, 41c, 41d) als ein Gehäuseabschnitt ausgebildet ist, der im Wesentlichen orthogonal gegenüber der Bremskraftrichtung (40) ausgerichtet ist, wobei in den Messabschnitt (41a, 41b, 41c, 41d) die Bremskraft in einem ersten Bereich (42a, 42b) eingeleitet wird und in einem zweiten Bereich (43), der gegenüber dem ersten Bereich (42a, 42b) in orthogonaler Richtung zur Bremskraftrichtung (40) beabstandet ist, in den Abstützabschnitt (38) eingeleitet wird.

4. Bremse nach einem der Ansprüche 1 bis 3, **dadurch gekennzeichnet, dass** die Bremseinrichtung (35) gegenüber Abstützabschnitt (38) in Bremskraftrichtung (40) in Folge der Biegung des Messabschnittes (41a, 41b, 41c, 41d) versetzt wird und dieser Versatz durch den Sensor gemessen wird.

5. Bremse nach einem der Ansprüche 1 bis 4, **dadurch gekennzeichnet, dass** die Bremseinrichtung (35) in Bremskraftrichtung (40) entlang einer Führung, umfassend bevorzugt mehrere Führungsbolzen (39a, 39b, 39c) gelagert ist.

6. Bremse nach Anspruch 5, **dadurch gekennzeichnet, dass** der Messabschnitt (41a, 41b, 41c, 41d) von dem Abstützabschnitt (38) oder der Bremseinrichtung (35) entkoppelt ist und eine Kraftübertragung zu dem Abstützabschnitt (38) hin bzw. von der Bremseinrichtung (35) in den Messabschnitt (41a, 41b, 41c, 41d) hinein nur über Druckkräfte erfolgt.

7. Bremse nach einem der Ansprüche 5 oder 6, **dadurch gekennzeichnet, dass** die Bremseinrichtung (35) gegenüber dem Abstützabschnitt (38) über zumindest zwei Messabschnitte (41a, 41b, 41c, 41d) in Bremskraftrichtung (40) abgestützt ist, wobei ein erster Messabschnitt (41a, 41c) die Bremseinrichtung (35) gegenüber dem Abstützabschnitt (38) in eine erste Richtung der Bremskraftrichtung (40) abstützt und der andere Messabschnitt (41b, 41d) in die zu der ersten Richtung entgegengesetzte Richtung.

8. Bremse nach einem der Ansprüche 1 bis 7, **dadurch gekennzeichnet, dass** die Bremse (1) über zumindest zwei voneinander getrennte Abstützabschnitte (10, 11) verfügt und die Bremseinrichtung (15) über jeweils einen, zu einem jeweiligen Abstützabschnitt (10, 11)führenden Messabschnitt (12, 13) gegenüber den Abstützabschnitten (10, 11)abgestützt ist und dadurch, dass die Messabschnitte (12, 13) bezüglich der Bremskraftrichtung (8) gegenüberliegend angeordnet sind, sodass die Bremsstange (4) zwischen den Messabschnitten (12, 13) hindurchgeführt wird.

9. Anordnung einer Bremse (1, 31) nach einem der Ansprüche 1 bis 8 und einer in der Bremse (1, 31) geführten Bremsstange (4, 34), wobei die Bremsstange (4, 34) dazu ausgelegt ist, an das zweite Teil (6) angeschlossen zu werden.

10. Anordnung nach Anspruch 9, **dadurch gekennzeichnet, dass** die Bremsstange (4) endseitig auf der dem Abstützabschnitt (10, 11) gegenüberliegenden Seite über einen Endanschlag (23), etwa einen Hammerkopf, verfügt, mit dem sich die Bremsstange (4) gegenüber der Bremse (1) formschlüssig abstützt und dadurch, dass eine mit dem Endanschlag (23) fluchtende Durchbrechung (24, 25) an der Bremse (1) von dem Abstützabschnitt (10, 11) zu der gegenüberliegenden Seite vorgesehen ist, in die ein stiftartiger Abstützbolzen (26, 27) eingesetzt ist, sodass der Endanschlag (23) ohne Zwischenschaltung des Messabschnittes (12, 13) an dem Abstützabschnitt (10,11) abstützbar ist.

11. System einer Bremse (1, 31) und einer Bremsstange (4, 34) nach einem der Ansprüche 9 oder 10, sowie einem ersten Teil (3) und einem gegenüber dem ersten Teil (3) zu bremsenden zweiten Teil (6), wobei die Bremse (1, 31) an dem ersten Teil (3) und die Bremsstange (4, 43) an dem zweiten Teil (6) angeschlossen sind.
